# EUROPEAN PATENT SPECIFICATION

(11) **EP 0 614 560 B1**
(45) Date of publication and mention of the grant of the patent: **22.04.1998**
(21) Application number: 92922003.6
(22) Date of filing: 07.10.1992
(51) Int. Cl.: G08B 15/00, A01M 29/02

(54) **Method and means for preventing trespassing**
Verfahren und Vorrichtung zur Verhinderung unbefugten Zugangs
Procédé et dispositif empêchant l'accès non autorisé

(30) Priority: 09.10.1991 SE 9102920
(43) Date of publication of application: 14.09.1994
(73) Proprietor: MultiSound Technology MST AB, 131 41 Nacka (SE)
(72) Inventor: Edvinsson, Dick, 179 60 Stenhamra (SE)
(74) Representative: Rosenquist, Per Olof
(86) International application number: SE9200703
(87) International publication number: WO9307600

(56) References cited:
- FR-A- 2 556 485
- GB-A- 2 166 277
- US-A- 3 636 559
- US-A- 3 872 472
- US-A- 3 893 106
- US-A- 4 001 817
- US-A- 4 186 387

## Description

The present invention refers to a method and a means for preventing trespassing and/or unauthorized staying in an area outdoors or indoors, e.g. in a building, part of a building, in vehicles, vessels.

### Technical background

Prior art alarms installed for protection of property against theft or damage have the disadvantage that the intruder can continue the activity until somebody reacts on the alarm and may thus also have time to finish the activity and leave the place before the alarm personnel reach the place.

There are also noice generating devices which are used for keeping away noxius animals and such, one example being disclosed in the French Patent Publication Nº 2556485. The device according to this publication can work with several sirens which can work with different frequencies and be controlled separately. It is said that this gives rise to an unbearable sound. However, it has been shown that animals such as rodents can get used to a noice and therefore return to the sound laden area. The device according to this publication is also said to be useful as a protective alarm. The human organ of hearing is however adjustable and also contains protective mechanisms which to a certain extent protect against high sounds, and consequently the usefulness of the means according to the French patent publication is highly unreliable also for this purpose.

### The invention

The object of the present invention is to provide a method and a means for generating of sound which is unendurable for humans and/or animals and which makes it impossible to stay within the field of operation of the means.

This is achieved with the method according to the present invention which is characterized in that sound signals with varying frequencies are transmitted out of phase in relation to each other from several sound generators in such directions that the sound waves from the sound generators meet within the area to be protected.

According to one embodiment of the invention, sound signals are transmitted with frequencies which periodically rise from and then return to the basic frequency.

According to another embodiment of the invention, sound signals are transmitted with frequencies successively rising from the basic frequency and abruptly returning back to the basic frequency.

According to a further embodiment of the invention the basic frequency for the sound signals are changed after predetermined time intervals. Hereby the risc of somebody quenching the sound signals with the aid of a counter sound generator is avoided.

According to a further embodiment of the invention a phase shift between the sound signals of in the order of milliseconds is used.

According to a further embodiment of the invention a sound level of 110 dB and up is used.

According to a further embodiment of the invention sound signals from at least four sound generators are used. Hereby use is made of the fact that the human organ of hearing possibly can endure three frequencies at the same time through the protective mechanisms, but that further simultaneous sound signals with different frequencies are not endured.

The invention also comprises a means for accomplishing the method according to the invention, which is characterized in that it comprises several sound generators with control means for generating sound signals with varying frequencies transmitted out of phase in relation to each other from said sound generators, whereby the sound generators are so directed that the sound waves from the sound generators meet within the area to be protected.

According to an embodiment of the means according to the invention the means comprises at least four sound generators.

### Description of preferred embodiments

The invention will now be described more in detail in connection with the presently preferred embodiment.

The intention of the invention is that the sound generators upon activation through some form of indication means, such as IR detectors, shall transmit sound signals so tuned that the total sound effect will get an intruder to immediately remove himself from the sound laden area.

Upon activation the sound generators, which according to the preferred embodiment are at least four, will transmit sound signals with a sound level of preferrably 110 dB and up with a certain phase shift. The sound signals have a frequency which rises successively from a basic frequency up to a top frequency and then abruptly returns to the basic frequency. This is repeated continuously when the alarm is working. The phase shift is of the order of milliseconds. This means that with four sound generators all the time four different sound signals will sound, which is experienced as unendurable, and staying in this sound will immediately lead to physical symptoms such as sickness and pain in the chest. The symptoms will cease within a couple of hours and no remaining problems have yet been revealed.

Without being bound to any specific scientific explanation, it seems that the phenomenon could be explained as follows. The protective mechanisms of the ear can protect the organ of hearing from harmful sounds at two different frequencies at least. With sounds on three frequencies discomfort is experienced, but at least some people can bear this for a certain time period. The protective mechanisms of the ear, however, can not defend themselves against the corresponding sound on four frequencies, which will lead to the above discussed symptoms.

A suitable arrangement of sound generators for performing the method according to the invention for the protection of a com comprises sound generators mounted along opposite limitation walls and directed toward each other such that the sound waves meet in the middle of the room. For example, four sound generators arranged side by side might be mounted on each side. Hereby a mat of sound is formed, within which nobody can stay without great discomfort.

In order to avoid that someone with the aid of a countersound generator extinguishes the sound, according to the preferred embodiment, the basic frequency is altered at certain time intervals, e.g. every tenth second.

The electronics required for the control of the sound generators and there mutual relationship are based on known technology, with which the man skilled in the art is well aquainted, and it does not constitute any part of the present invention and is therefore not described in detail.

## Claims

1. Method for preventing trespassing and/or unauthorized staying in an area outdoors or indoors, e.g. in a building, part of a building, in vehicles, vessels, **characterized in** that sound signals with varying frequencies are transmitted out of phase in relation to each other from several sound generators in such directions that the sound waves from the sound generators meet within the area to be protected.

2. Method according to claim 1, **characterized in** that sound signals are transmitted with frequencies which periodically rise from and return to a basic frequency.

3. Method according to claim 1, **characterized in** that sound signals are transmitted with frequencies which successively rise from the basic frequency and abruptly fall back to the basic frequency.

4. Method according to any of claims 1 - 3, **characterized in** that the basic frequency for the sound signals are changed after a certain predetermined time interval.

5. Method according to claim 4, **characterized in** that the basic frequency is changed every tenth second.

6. Method according to claim 1, **characterized in** that a phase shift between the sound signals in the order of milliseconds is used.

7. Method according to any of claims 1 - 6, **characterized in** that a sound level of 110 dB and up is used.

8. Method according to any of claims 1 - 7, **characterized in** that sound signals from at least four sound generators are used.

9. Means for preventing trespassing and/or unauthorized staying in an area outdoors or indoors, e.g. in a building, part of a building, in vehicles, vessels, for performing the method according to claim 1, **characterized in** that it comprises several sound generators with control means for generating sound signals with varying frequencies transmitted out of phase in relation to each other from said sound generators, whereby the sound generators are so directed that the sound waves from the sound generators meet within the area to be protected.

10. Means according to claim 9, **characterized in** that comprises at least 4 sound generators.

## Patentansprüche

1. Verfahren zur Verhinderung unbefugten Zugangs und/oder unbefugten Aufenthalts in einem Bereich im Freien oder im Haus, z.B. in einem Gebäude, in einem Gebäudeabschnitt, in Landfahrzeugen oder in Wasserfahrzeugen, dadurch gekennzeichnet, daß Schallsignale mit variierenden Frequenzen, außer Phase miteinander von verschiedenen Schallerzeugern in derartige Richtungen übertragen werden, daß die Schallwellen von den Schallerzeugern einander in dem zu schützenden Bereich treffen.

2. Verfahren nach Anspruch 1, dadurch gekennzeichnet, daß Schallsignale mit Frequenzen übertragen werden, die periodisch von einer Grundfrequenz aus ansteigen und zu dieser zurückkehren.

3. Verfahren nach Anspruch 1, dadurch gekennzeichnet, daß Schallsignale mit Frequenzen übertragen werden, die sukzessiv von einer Grundfrequenz aus ansteigen und abrupt zu der Grundfrequenz zurückkehren.

4. Verfahren nach einem der Ansprüche 1 bis 3, dadurch gekennzeichnet, daß die Grundfrequenzen der Schallsignale nach einem vorbestimmten Zeitintervall geändert werden.

5. Verfahren nach Anspruch 4, dadurch gekennzeichnet, daß die Grundfrequenz alle zehn Sekunden geändert wird.

6. Verfahren nach Anspruch 1, dadurch gekennzeichnet, daß eine Phasenverschiebung zwischen den Schallsignalen in der Größenordnung von Millisekunden verwendet wird.

7. Verfahren nach einem der Ansprüche 1 bis 6, dadurch gekennzeichnet, daß ein Schallpegel von 110 dB und darüber verwendet wird.

8. Verfahren nach einem der Ansprüche 1 bis 7, dadurch gekennzeichnet, daß Schallsignale von mindestens vier Schallerzeugern verwendet werden.

9. Vorrichtung zur Verhinderung unbefugten Zutritts und/oder unbefugten Aufenthalts in einem Bereich im Freien oder im Haus, z.B. in einem Gebäude, einem Gebäudeabschnitt, in Landfahrzeugen oder in Wasserfahrzeugen zur Durchführung des Verfahrens nach Anspruch 1, dadurch gekennzeichnet, daß sie verschiedene Schallerzeuger mit Steuerungsmitteln zum Erzeugen von Schallsignalen mit variierenden Frequenzen aufweist, die außer Phase miteinander von den Schallerzeugern übertragen werden, wobei die Schallerzeuger derart angeordnet sind, daß die Schallwellen von den Schallerzeugern einander in dem zu schützenden Bereich treffen.

10. Vorrichtung nach Anspruch 9, dadurch gekennzeichnet, daß die Vorrichtung mindestens vier Schallerzeuger aufweist.

## Revendications

1. Procédé destiné à empêcher le passage et/ou le stationnement non autorisé dans des zones extérieures ou intérieures, par exemple dans un bâtiment, une partie d'un bâtiment, dans des véhicules, des navires, caractérisé en ce que des signaux sonores avec des fréquences variables sont transmis en décalage de phase en relation les uns avec les autres à partir de plusieurs générateurs de son dans des directions telles que des ondes sonores provenant des générateurs de son se rencontrent à l'intérieur de la zone à protéger.

2. Procédé selon la revendication 1, caractérisé en ce que les signaux sonores sont transmis sous des fréquences qui s'élèvent périodiquement à partir d'une fréquence de base et y reviennent.

3. Procédé selon la revendication 1, caractérisé en ce que des signaux sonores sont transmis sous des fréquences qui s'élèvent successivement depuis la fréquence de base et retombent brusquement à la fréquence de base.

4. Procédé selon l'une quelconque des revendications 1 à 3, caractérisé en ce que la fréquence de base pour les signaux sonores est modifiée après un certain intervalle de temps prédéterminé.

5. Procédé selon la revendication 4, caractérisé en ce que la fréquence de base est modifiée tous les dizièmes de seconde.

6. Procédé selon la revendication 1, caractérise en ce qu'on utilise un déphasage entre les signaux sonores de l'ordre de millisecondes.

7. Procédé selon l'une quelconque des revendications 1 à 6, caractérisé en ce qu'on utilise un niveau sonore de 110 dB et au-delà.

8. Procédé selon l'une quelconque des revendications 1 à 7, caractérisé en ce que les signaux sonores sont utilisés en provenance d'au moins quatre générateurs de son.

9. Moyens pour empêcher le passage et/ou le stationnement non autorisé dans des zones extérieures ou intérieures, par exemple dans un bâtiment, une partie d'un bâtiment, dans des véhicules, des navires, pour la mise en oeuvre du procédé selon la revendication 1, caractérisés en ce qu'ils comprennent plusieurs générateurs de son comportant des moyens de commande pour engendrer des signaux sonores sous des fréquences variables transmises en décalage de phase en relation les unes par rapport aux autres, en provenance desdits générateurs de son, tandis que les générateurs de son sont ainsi dirigés, que les ondes sonores provenant des générateurs de son se rencontrent à l'intérieur de la zone à protéger.

10. Moyens selon la revendication 9, caractérisés en ce qu'ils comprennent au moins quatre générateurs de son.
